# EUROPÄISCHE PATENTSCHRIFT

(11) **EP 2 732 369 B1**
(45) Veröffentlichungstag und Bekanntmachung des Hinweises auf die Patenterteilung: **07.08.2019**
(21) Anmeldenummer: 12733008.2
(22) Anmeldetag: 21.06.2012
(51) Int. Cl.: H04L 12/24, G06F 9/455, G06F 9/50, G06F 9/48, H04L 29/14, H04L 29/08

(54) **COMPUTERSYSTEM, VERFAHREN ZUM STARTEN EINES SERVER-COMPUTERS, SERVER-COMPUTER, MANAGEMENTSTATION UND VERWENDUNG**
COMPUTER SYSTEM, METHOD FOR STARTING A SERVER COMPUTER, SERVER COMPUTER, MANAGEMENT STATION, AND USE
SYSTÈME INFORMATIQUE, PROCÉDÉ DE DÉMARRAGE D'UN SERVEUR, SERVEUR, POSTE DE GESTION ET UTILISATION

(30) Priorität: 11.07.2011 DE 102011107092
(43) Veröffentlichungstag der Anmeldung: 21.05.2014
(73) Patentinhaber: Fujitsu Limited, Kawasaki-shi Kanagawa 211-8588 (JP)
(72) Erfinder: SUDHOFF-EWERS, Michael, 33102 Paderborn (DE); BERNER, Lothar, 82008 Unterhaching (DE); THOELKE, Andreas, 33106 Paderborn (DE)
(74) Vertreter: Epping - Hermann - Fischer
(86) Internationale Anmeldenummer: PCT/EP2012/061998
(87) Internationale Veröffentlichungsnummer: WO 2013/007490

(56) Entgegenhaltungen:
- EP-A1- 1 355 476
- WO-A1-2009/134219
- US-A1- 2005 120 160
- US-A1- 2007 115 818
- US-A1- 2009 172 381

## Beschreibung

Die Erfindung betrifft ein Computersystem, aufweisend wenigstens einen Server-Computer, eine Managementstation und wenigstens ein Datennetzwerk, über das der wenigstens eine Server-Computer und die Managementstation datentechnisch gekoppelt sind. Des Weiteren betrifft die Erfindung ein Verfahren zum Starten eines Server-Computers sowie einen Server-Computer, aufweisend wenigstens einen Prozessor, wenigstens eine Netzwerkkomponente und einen Systemmanagementbaustein. Schließlich betrifft die Erfindung eine Managementstation für ein derartiges Computersystem und die Verwendung eines Systemmanagementbausteins.

Computersysteme umfassend wenigstens einen Server-Computer sind vielfach bekannt. Beispielsweise sind so genannte Blade-Server-Systeme bekannt, bei denen eine Mehrzahl von so genannten Server-Blades in eine Midplane eines gemeinsamen Chassis des Blade-Server-Systems eingesteckt werden können. Dabei stellen die Server-Blades Rechenleistung zum Ausführen von Anwendungen zur Verfügung. Weitere Infrastrukturkomponenten, insbesondere Netzteile und Netzwerkkomponenten, werden in der Regel von einer Rückseite her in das Chassis eingeschoben und stellen eine Betriebsspannung bzw. Schnittstellenfunktionalitäten für die eingesteckten Server-Blades bereit. Des Weiteren umfassen derartige Blade-Server-System in der Regel ein so genanntes Management-Blade, das unter anderem zur Verwaltung der in das Chassis eingesteckten Server-Blades dient.

Um eine besonders einfache und flexible Zuordnung von unterschiedlichen Anwendungsprogrammen auf unterschiedliche Server-Blades zu ermöglichen, ist es ebenfalls bekannt, eine so genannte Virtualisierung von Serverprofilen vorzunehmen. Durch die Virtualisierung der Serverprofile werden die durch die einzelnen Server-Blades ausgeführten Anwendungen von der konkreten, zur Ausführung verwendeten Hardware abstrahiert. Insbesondere können einzelnen Server-Blades virtuelle Netzwerkkennungen zugewiesen werden, die anstelle der in den Netzwerkkomponenten gespeicherten, physikalisch Netzwerkkennungen zur Identifizierung des Server-Blades verwendet werden. Auf diese Weise ist es möglich, eine bestimmte Anwendung auf einem beliebigen Server-Blades auszuführen, wobei es für die Anwendung jeweils so erscheint, als liefe sie auf demselben Server mit derselben Netzwerkkennung ab.

In diesem Fall werden die virtuellen Netzwerkkennungen bereits beim Starten der einzelnen Server-Blades durch das Management-Blade des Blade-Chassis bereitgestellt. Beispielsweise können die Netzwerkkennungen direkt von den einzelnen Server-Blades über ein Speicher-Interface aus einem nichtflüchtigen Speicher des Management-Blades abgerufen werden.

Problematisch an dem beschriebenen Ansatz ist, dass sich dieser nicht für den Einsatz in heterogenen Umgebungen eignet. Insbesondere bei derartigen Computersystemen, bei denen die Server-Computer nicht über ein gemeinsames Management-Blade verwaltet werden, kann eine eindeutige Zuteilung von virtuellen Adressen nicht gewährleistet werden. Eine manuelle Zuweisung von virtuellen Adressen ist fehlerträchtig und könnte daher zu einer doppelten Zuweisung derselben virtuelle Adresse führen. Die mehrmalige Verwendung der gleichen virtuellen Adresse kann jedoch zu schweren Ausnahmezuständen führen, da zwei physikalische Server in diesem Fall dieselbe logische Adresse verwenden und sich somit gegenseitig stören.

Aus der US 2005/0120160 A1 ist ein System und ein Verfahren zur Verwaltung von virtuellen Servern bekannt, bei dem Verwaltungsfähigkeiten für eine virtuelle Computerplattform geschaffen werden. Diese Plattform gestattet vernetzte physikalische Ressourcen wie beispielsweise Prozessoren, Speicher, Netzwerk- und Speicherschnittstellen zu abstrahieren und auf virtuelle Ressourcen abzubilden. Die virtuellen Ressourcen, die in einer virtuellen Partition enthalten sind, können zu einem virtuellen Server zusammengefasst werden, der ein Gastbetriebssystem wie beispielsweise Linux ausführt. In einer Ausgestaltung können beliebige Ressourcen für jeden virtuellen Server zur Verfügung gestellt werden, unabhängig von physikalischen Grenzen, die die Ressourcen trennen. Beispielsweise kann jede Anzahl von physikalischen Prozessoren oder beliebig viel physikalischer Speicher von einem virtuellen Server verwendet werden, selbst wenn diese Ressourcen sich über unterschiedliche Knoten erstrecken. Die US 2005/0120160 A1 offenbart keine flexible und sicher Zuordnung von Netzwerkkennungen in einer heterogenen Umgebung.

Die EP 1 355 476 A1 betrifft eine Datenverarbeitungsvorrichtung zur Adresszuteilung. Die Datenverarbeitungsvorrichtung kann mit einem Kommunikationsnetzwerk gekoppelt werden und ist dazu eingerichtet, eine erste Adresse zu bestimmen, die es der Datenverarbeitungsvorrichtung gestattet, mit wenigstens einer zweiten Datenverarbeitungsvorrichtung, die mit dem Netzwerk gekoppelt ist, zu kommunizieren. Dabei weist die zweite Datenverarbeitungsvorrichtung eine zweite Adresse auf, wobei die erste und zweite Adresse jeweils einen ersten und zweiten Teil umfassen. Die Verarbeitungsvorrichtung umfasst einen Prozessor, der dazu eingerichtet ist, die Adresse in Übereinstimmung mit einem ersten vorbestimmten Adressierungsmechanismus zu bestimmen, die zweite Adresse zu bestimmen und die ersten Teile der ersten und zweiten Adresse zu vergleichen. Dabei ist die Vorrichtung dazu eingerichtet, eine neue erste Adresse zu bestimmen, falls die ersten Teile der ersten und zweiten Adresse nicht gleich sind. Die US 2005/0120160 A1 offenbart ebenfalls keine flexible und sicher Zuordnung von Netzwerkkennungen in einer Virtualisierungsumgebung.

Eine Aufgabe der vorliegenden Erfindung ist es, verbesserte Systeme und Vorrichtungen sowie Verfahren zu deren Betrieb zu beschreiben, die eine sichere und flexible Zuordnung von Netzwerkkennungen gestatten. Diese Aufgabe wird durch die Gegenstände der unabhängigen Ansprüche gelöst.

Gemäß einem ersten Aspekt der Erfindung wird ein Computersystem mit wenigstens einem Server-Computer beschrieben, wobei der Server-Computer wenigstens einen Prozessor, einen Arbeitsspeicher sowie einen Systemmanagementbaustein in der Form eines integrierten Mikrocontrollers mit eigenem Arbeitsspeicher und nichtflüchtigem Speicher sowie einer Netzwerkschnittstelle aufweist. Das Computersystem weist des Weiteren eine Managementstation auf, wobei die Managementstation dazu eingerichtet ist, eine Mehrzahl von Serverprofilen zu verwalten und wenigstens ein Serverprofil der Mehrzahl von Serverprofilen auszuwählen und dem wenigstens einen Server-Computer zuzuordnen, wobei jedes der Serverprofile wenigstens eine virtualisierte Netzwerkkennung umfasst, die dazu dient, einen dem Serverprofil zugeordneten Serverdienst eindeutig zu identifizieren. Das Computersystem umfasst außerdem wenigstens ein Datennetzwerk, über das der wenigstens eine Server-Computer und die Managementstation datentechnisch gekoppelt sind. Der Systemmanagementbaustein des wenigstens einen Server-Computers ist dazu eingerichtet, bei Aktivierung des Systemmanagementbausteins wenigstens eine Anfrage zum Abrufen oder Bestätigen wenigstens einer virtualisierten Netzwerkkennung eines von der Managementstation zugeordneten Serverprofils an die Managementstation zu senden. Des Weiteren konfiguriert der Systemmanagementbaustein in einer Pre-Boot-Phase wenigstens eine Netzwerkkomponente des Server-Computers unter Verwendung der wenigstens einen von der Managementstation übermittelten oder bestätigten, virtualisierten Netzwerkkennung und startet den Server-Computer nachfolgend unter Verwendung der konfigurierten Netzwerkkennung, falls auf die Anfrage hin eine Antwort der Managementstation zur Übermittlung oder zur Bestätigung der wenigstens einen virtualisierten Netzwerkkennung empfangen wurde. Andernfalls verhindert er einen Start des wenigstens einen Server-Computers mit einer zuvor von der Managementstation übermittelten, virtualisierten Netzwerkkennung.

Durch die Verwendung eines Systemmanagementbausteins zum Aufbauen einer Managementverbindung kann eine virtualisierte Netzwerkkennung abgerufen oder überprüft werden. Somit kann eine Virtualisierung eines beliebigen Server-Computers mittels Konfiguration einer Komponente des Server-Computers durch den Systemmanagementbaustein vorgenommen werden. Dabei sorgt das Verhindern des Starts des Server-Computers mit einer zuvor von einer Managementstation abgerufenen, virtualisierten Netzwerkkennung im Falle eines Fehlers des Datennetzwerks oder der Managementstation dafür, dass eine virtualisierte Netzwerkkennung stets von nur einem Server-Computer verwendet wird.

Gemäß einem zweiten Aspekt der Erfindung wird ein Verfahren zum Starten eines Server-Computers mit den Schritten gemäß Anspruch 8 beschrieben.

Gemäß einem dritten Aspekt der Erfindung wird ein Server-Computer, aufweisend wenigstens einen Prozessor sowie einen mit dem Prozessor gekoppelten Arbeitsspeicher zum Verarbeiten von Daten, gemäß Anspruch 12 offenbart.

Gemäß einem vierten Aspekt gemäß Anspruch 15 der Erfindung wird ein Systemmanagementbausteins zum Virtualisieren eines Server-Computers verwendet.

Weitere vorteilhafte Ausgestaltungen der Erfindung sind in den abhängigen Patentansprüchen sowie der ausführlichen Beschreibung von Ausführungsbeispielen beschrieben.

Die Erfindung wird nachfolgend unter Bezugnahme auf die angehängten Figuren anhand von unterschiedlichen Ausführungsbeispielen näher beschrieben, wobei dieselben Bezugszeichen für Komponenten mit gleicher oder ähnlicher Funktion in unterschiedlichen Ausführungsbeispielen verwendet werden. In den Zeichnungen zeigen:
- Figur 1: ein Computersystem mit einer Mehrzahl von Rack-Servern und einer zentralen Managementstation,
- Figur 2: eine Anordnung, umfassend eine Managementstation, mehrere Server-Blades sowie mehrere Rack-Server, und
- Figur 3: ein Ablaufdiagramm eines Verfahrens zum Starten eines Server-Computers.

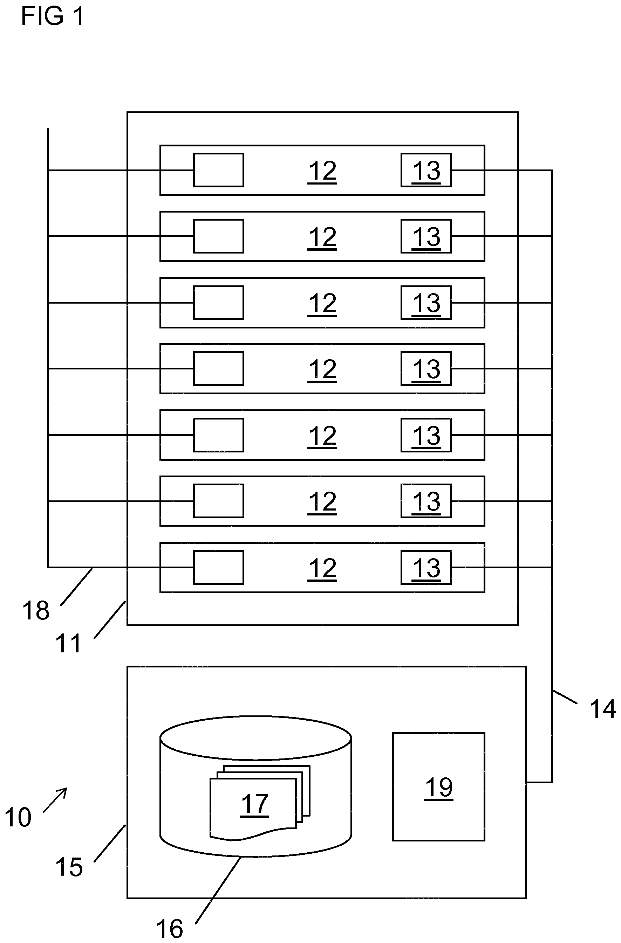

Figur 1 zeigt ein Computersystem 10. Das Computersystem 10 umfasst ein Rack-Gehäuse 11 mit einer Mehrzahl von darin aufgenommenen Rack-Servern 12. Bei den Rack-Servern 12 handelt es sich beispielsweise um Server-Computer mit jeweils zwei Prozessoren mit einer Intel-Architektur sowie in dem Server-Computer angeordnetem Arbeitsspeicher. Jeder der Rack-Server 12 umfasst des Weiteren einen Systemmanagementbaustein (SMB) 13.

Bei den Systemmanagementbausteinen 13 handelt es sich im Ausführungsbeispiel um integrierte Mikrocontroller mit eigenem Arbeitsspeicher und nichtflüchtigem Speicher sowie einer Netzwerkschnittstelle. In der Figur 1 dargestellten Ausführungsform handelt es sich dabei um eine physikalisch unabhängige Netzwerkschnittstelle. Alternativ ist jedoch auch eine (Mit-)Benutzung einer bereits vorhandenen Netzwerkschnittstelle der Rack-Server 12 möglich.

Die Systemmanagementbausteine 13 dienen unter anderem zur Fernkonfiguration und Überwachung der Rack-Server 12. Zu diesem Zweck sind die Netzwerkschnittstellen der Systemmanagementbausteine 12 über ein Administrationsnetzwerk 14, beispielsweise ein lokales Ethernet-Netzwerk, mit einer Managementstation 15 verbunden. Bevorzugt werden die Systemmanagementbausteine 13 auch in einem sogenannten Standby-Zustand der Rack-Server 12 mit einer Betriebsspannung versorgt.

Bei der Managementstation 15 handelt es sich beispielsweise um einen von dem Rack-Gehäuse 11 unabhängig angeordneten und von den Rack-Servern 12 funktional unabhängigen Server-Computer. Beispielsweise handelt es sich um einen gesonderten Server-Computer, der zur Administration der Rack-Server 12 verwendet wird und besonders ausfallsicher ausgestaltet ist. Die Managementstation 15 umfasst eine Datenbank 16, auf der unterschiedliche Serverprofile 17 gespeichert sind. Jedes der Serverprofile ist einer gesonderten Anwendung oder einem Serverdienst zugeordnet. Beispielsweise ist ein erstes Serverprofil einem Apache Web-Server zugeordnet, ein zweites Serverprofil einen Microsoft Exchange Server und ein drittes Serverprofil einem Oracle Datenbankserver.

Die Serverprofile 17 können entweder manuell von einem Administrator erstellt werden oder automatisch durch Analyse bestehender, physikalischer Server-Computer erzeugt werden. Jedes der Serverprofile 17 umfasst verschiedene Konfigurationsparameter. Beispielsweise umfasst das erste Serverprofil Konfigurationsparameter bezüglich einer Kanalaktivierung bzw. -deaktivierung unterschiedlicher Eingabe-/Ausgabe-Kanäle, eine virtuelle MAC-Adresse zur Identifizierung in einem lokalen Netzwerk und/oder virtuelle WWPN- oder WWNN-Kennungen für ein Speichernetzwerk sowie Parameter bezüglich einer Boot-Konfiguration für den zugeordneten, virtualisierten Serverdienst. Die Informationen bezüglich der Boot-Konfigurationen können beispielsweise einen Boot-Modus wie etwa PXE, SAN oder iSCSI enthalten sowie ein Boot Device wie beispielsweise ein Fibre-Channel-Storage-Gerät oder ein iSCSI-Target sowie eine Priorität. Zumindest einige der gespeicherten Parameter dienen dazu, den dem Serverprofil 17 zugeordneten Serverdienst eindeutig zu identifizieren.

Die Rack-Server 12 sind über zusätzliche Netzwerkkomponenten, beispielsweise eingebaute Netzwerkkomponenten der jeweiligen Hauptplatinen oder in Erweiterungssteckplätzen angeordnete Einsteckkarten, mit einem weiteren Datennetzwerk 18 verbunden. Über das weitere Datennetzwerk 18 findet unter anderem ein Datenaustausch zwischen den einzelnen Rack-Servern 12 und verschiedenen, in der Figur 1 nicht dargestellten Client-Computern statt. In einer alternativen Ausgestaltung kann es sich bei dem Administrationsnetzwerk 14 und dem weiteren Datennetzwerk 18 auch um dasselbe physikalische Datennetzwerk handeln, das lediglich logisch aufgeteilt ist, beispielsweise durch Verwendung unterschiedlicher virtueller privater Netzwerke.

Gemäß einer Ausgestaltung der Erfindung werden in einem ersten Schritt sämtliche Rack-Server 12, die in dem Administrationsnetzwerk 14 vorhanden sind, von der Managementstation 15 erfasst. Beispielsweise erkennt die Managementstation 15 eine Anfrage der Systemmanagementbausteine 13 gemäß dem so genannte Dynamic Host Configuration Protocol (DHCP) und trägt daraufhin die physikalischen Netzwerkkennungen der Systemmanagementbausteine 13 in eine Tabelle oder Datenbank der zur Verfügung stehenden Server-Computer ein. Die erkannten Rack-Server 12 werden daraufhin in eine Management-Software 19, die auf der Managementstation 15 abläuft, übernommen und stehen zur Zuordnung von Serverprofilen 17 zur Verfügung. Alternativ kann selbstverständlich auch eine andere, beispielsweise manuelle Konfigurationsschnittstelle vorgesehen sein. Beispielsweise kann ein Systemadministrator einzelne oder Gruppen von Rack-Server 12 durch die Managementstation 15 für eine Virtualisierung auswählen.

Die zur Serverprofile 17 der Datenbank 16 können daraufhin von der Management-Software 19 einem der Mehrzahl der Rack-Server 12 zugeordnet werden. Soll ein bestimmtes Serverprofil 17 aktiviert werden, wird es einem der zur Verfügung stehenden Rack-Server 12 zugeordnet und die zugehörigen Konfigurationsparameter über das Administrationsnetzwerk 14 an den zugehörigen Systemmanagementbaustein 13 übertragen. Dieser konfiguriert daraufhin unter anderem die Netzwerkkomponenten des Rack-Servers 12, die zum Zugriff auf das externe Datennetzwerk 18 verwendet werden, unter Verwendung der übertragenen Konfigurationsparameter in einer so genannten Pre-Boot-Phase. Anschließend wird die Stromversorgung einer Hauptplatine und eines darauf angeordneten Prozessors des Rack-Servers 12 aktiviert und dieser fährt unter Verwendung der eingestellten Konfigurationsparameter hoch und führt die Server-Software gemäß dem zugeordneten Serverprofil 17 aus.

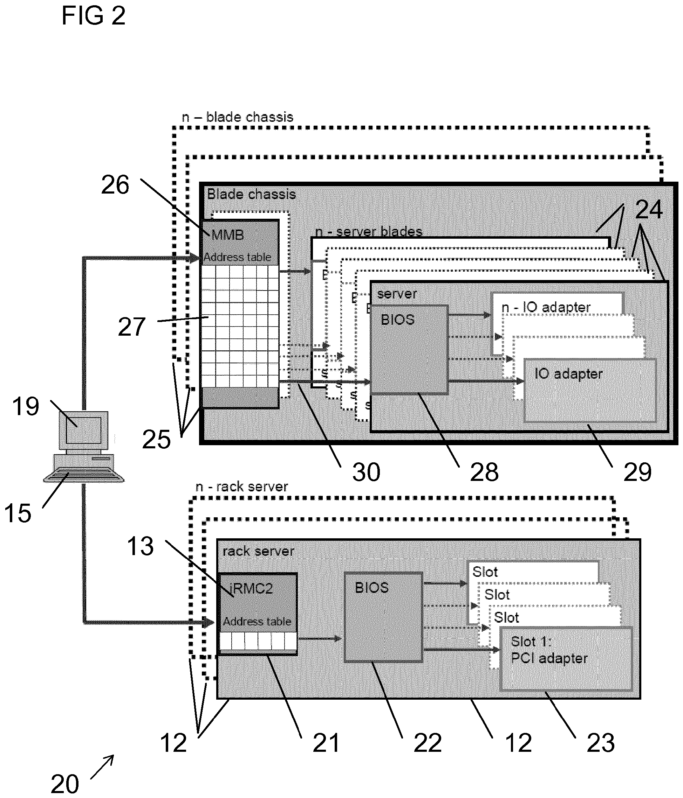

Figur 2 zeigt ein anderes Computersystem 20 gemäß einem zweiten Ausführungsbeispiel der Erfindung. Bei dem Computersystem 20 handelt es sich um ein heterogenes Computersystem, bei dem eine Mehrzahl von Server-Computern in Form von Rack-Servern 12 und Server-Blades 24 gemeinsam durch eine zentrale Managementstation 15 mit einer darauf ablaufenden Management-Software 19 verwaltet werden.

Jeder der Rack-Server 12 weist einen Systemmanagementbaustein 13 mit darin enthaltenen Adressdaten für eine oder mehrer I/O-Komponenten auf. Im Ausführungsbeispiel sind die Adressdaten in Form einer Adresstabelle 21 in einem Arbeitsspeicher des Systemmanagementbausteins 13 gespeichert. Dies ist insbesondere dann vorteilhaft, wenn ein Rack-Server 12 mehrere I/O-Komponenten aufweist. Selbstverständlich können auch einzelne Adresseinträge in einem Speicher des Systemmanagementbausteins 13 gespeichert werden, insbesondere wenn jeder Rack-Server 12 im Betrieb nur eine einzelne Netzwerkkennung benötigt.

Der Systemmanagementbaustein 13 ist über einen BIOS-Baustein 22 mit einer Mehrzahl von Einsteckkarten 23 gekoppelt. Bei den Einsteckkarten 23 handelt es sich beispielsweise um PCI-Netzwerkkarten, Fibre-Channel-Adapter oder sonstige I/O-Komponenten des Rack-Servers 12. Die Einsteckkarten 23 werden unter Verwendung der Adresstabelle 21 des Systemmanagementbausteins 13 konfiguriert. Beispielsweise kann der Systemmanagementbaustein 13 entsprechende Konfigurationsdaten über einen Systemmanagementbus direkt in geeignete, flüchtigen oder nicht-flüchtigen Konfigurationsregister einschreiben. Alternativ kann der BIOS-Baustein 22 oder die Einsteckkarten 23 entsprechende Werte vom dem Systemmanagementbaustein 13 abrufen.

Die zur Konfiguration benötigten Adressdaten werden bei jedem Start eines Rack-Servers 12 durch den Systemmanagementbaustein 13 von der Managementstation 15 abgerufen oder bestätigt. Erfolgt auf eine Anfrage des Systemmanagementbausteins 13 keine Antwort der Managementstation 15, wird der Rack-Server 12 gemäß der beschriebenen Ausgestaltung nicht gestartet. Vielmehr verbleibt der Rack-Server 12 solange in einer so genannten Pre-Boot-Phase, bis die angeforderten Adressdaten von der Managementstation 15 bereitgestellt oder bestätigt werden. Alternativ ist es auch möglich, den Rack-Server 12 unter Verwendung von in den jeweiligen Einsteckkarten 23 hinterlegten, physikalischen Adressen zu starten. In diesem Fall steht eine Virtualisierung für den jeweiligen Rack-Server 12 nicht zur Verfügung.

Im dargestellten Ausführungsbeispiel sind eine Mehrzahl von Server-Blades 24 in einem gemeinsamen Blade-Chassis 25 angeordnet. Das Blade-Chassis 25 umfasst des Weiteren ein Management-Blade 26 mit einer darin gespeicherten Adresstabelle 27. Selbstverständlich können das Management-Blade 26 und die darin gespeicherte Adresstabelle 27 auch redundant ausgelegt werden. Ebenfalls können weitere Blade-Chassis mit weiteren Server-Blades von der Managementstation 15 verwaltet werden. Dies ist in der Figur 2 gestrichelt angedeutet.

Jeder der Server-Blades 24 umfasst einen BIOS-Baustein 28 sowie einen oder mehrere I/O-Adapter 29. Bei den I/O-Adaptern handelt es sich beispielsweise um Netzwerkkomponenten, SAN-Adapter oder Fiber-Channel-Adapter. Beim Start eines Server-Blades 24 ruft der BIOS-Baustein 28 zugehörige Adressinformationen für die I/O-Adapter 29 aus der Adresstabelle 27 des Management-Blades 26 ab. Dies erfolgt z. B. über eine Speicherschnittstelle 30 zwischen dem BIOS-Baustein 28 und dem Management-Blade 26. Die in der Adresstabelle 27 eingetragenen Daten werden im Ausführungsbeispiel von der Management-Software 19 der Managementstation 15 verwaltet und gegebenenfalls aktualisiert. Somit kann ein Serverprofil 17 sowohl einem Rack-Server 12 als auch einem Server-Blade 24 zugeordnet werden.

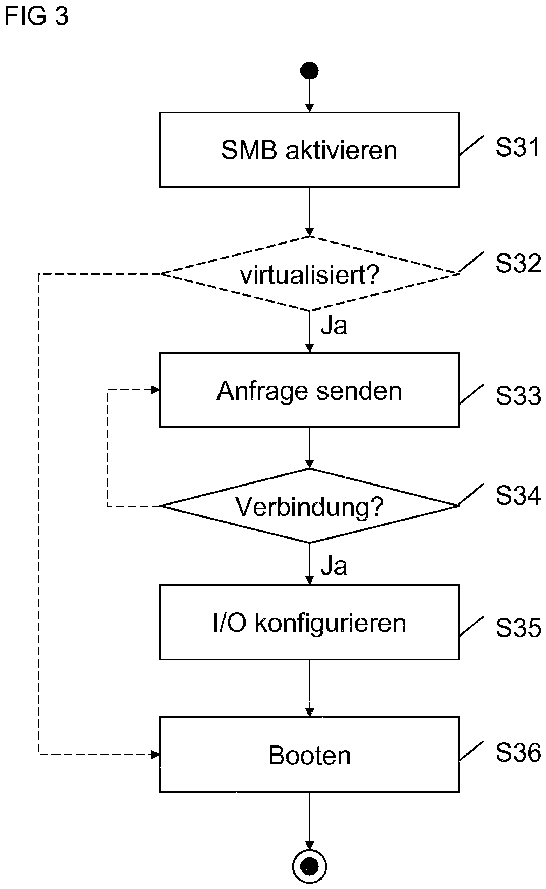

In der Figur 3 ist ein Verfahren zum Starten eines Server-Computers wie beispielsweise eines Rack-Servers 12, eines Server-Blades 24 oder eines einzelnen Server-Computers beschrieben.

In einem ersten Schritt S31 wird ein Systemmanagementbaustein 13 des Server-Computers aktiviert. Die Aktivierung des Systemmanagementbausteins 13 kann beispielsweise durch Anlegen einer Stromversorgung beim ersten Einschalten oder nach einem Stromausfall oder durch Aufwecken des Systemmanagementbausteins 13 über ein Administrationsnetzwerk 14 erfolgen. Im zuletzt genannten Fall schickt die Managementstation 14 ein so genanntes Magic Packet gemäß dem Wake-on-LAN (WoL) Protokoll über das Administrationsnetzwerk 14 an den Systemmanagementbausteins 13 eines Server-Computers.

In einem optionalen Schritt S32 überprüft der Systemmanagementbaustein 13 zunächst, ob eine Virtualisierung des Rack-Servers 12 gewünscht ist. Zu diesem Zweck ist in einem nichtflüchtigen Speicher der Systemmanagementbaustein 13 oder einer anderen Komponente des Server-Computers eine Kennzeichnung gespeichert, die angibt, ob eine Virtualisierung verwendet werden soll. Alternativ kann eine derartige Abfrage auch über das Administrationsnetzwerk 14 an die Managementstation 15 gerichtet werden. Gibt die entsprechende Kennzeichnung an, dass der Server-Computers nicht virtualisiert werden soll, springt das Verfahren unmittelbar zum Schritt S36, in dem der Server-Computers auf konventionelle Weise gebootet wird.

Wird in Schritt S32 dagegen erkannt, dass eine Virtualisierung verwendet werden soll, wird das Verfahren in Schritt S33 mit dem Ermitteln wenigstens einer Netzwerkkennung oder eines anderen Konfigurationsparameters zur Virtualisierung fortgesetzt. Im Ausführungsbeispiel fordert der Systemmanagementbaustein 13 beispielsweise eine virtuelle MAC-Adresse von der Managementstation 15 an. Zu diesem Zweck überträgt er eine Konfigurationsanfrage gemäß einem Fernkonfigurationsprotokoll über ein Administrationsnetzwerk 14 an die Managementstation 15. Die Konfigurationsanfrage wird von der Management-Software 19 der Managementstation 15 ausgewertet.

Alternativ kann eine Kennung auch aus einem lokalen Speicher des Computersystems ermittelt werden. In diesem Fall muss vor deren Verwendung jedoch ebenfalls eine Managementverbindung mit der Managementstation 15 aufgebaut werden, um die Gültigkeit der gespeicherten Kennung zu verifizieren.

In einem Schritt S34 überprüft der Systemmanagementbaustein 13 daher, ob eine Managementverbindung zu der Managementstation 15 erfolgreich aufgebaut werden konnte. Beispielsweise überprüft der Systemmanagementbaustein 13, ob eine virtuelle MAC-Adresse oder eine sonstige Kennung zur Konfiguration wenigstens einer I/O-Komponente des Server-Computers von der Managementstation 15 empfangen wurde oder eine lokal gespeicherte Adresse von diesem bestätigt wurde. Ist dies nicht der Fall, wartet der Systemmanagementbaustein 13 weiterhin auf eine Antwort. Nach Ablauf einer vorbestimmten Zeitdauer wird gemäß einer optionalen Ausgestaltung im Schritt S33 erneut eine Anfrage an die Managementstation 15 versendet.

In einer nicht dargestellten, alternativen Ausführung ist es auch möglich, das Verfahren nach Ablauf einer vorbestimmten Zeit im Schritt S36 mit dem Booten des Server-Computers unter Verwendung von physikalischen Kennungen der eingebauten I/O-Komponenten fortzusetzen.

Wurde die angeforderte Kennung und gegebenenfalls weitere erforderliche Konfigurationsparameter für I/O-Komponenten des Server-Computers erhalten, werden in Schritt S35 die I/O-Komponenten des Server-Computers konfiguriert. Insbesondere werden dabei Netzwerkkomponenten zum Zugriff in einem weiteren Datennetzwerk 18 konfiguriert. Beispielsweise kann eine virtuelle MAC-Adresse einer Netzwerkkarte eingestellt werden sowie ein weltweiter Name einer Fibre-Channel-Komponente.

Durch die Bereitstellung oder Bestätigung einer zuvor bereitgestellten virtualisierten Adressen kann das Serverprofil 17, dem die virtuelle Adresse zugeordnet ist, auf dem zuvor durch die Managementstation 15 bestimmten Server-Computer ausgeführt werden. Dies erfolgt in Schritt S36 durch ein Booten des Server-Computers, beispielsweise eines ersten Rack-Servers 12, unter Verwendung der von der Managementstation 15 erhaltenen oder bestätigten Konfigurationsdaten.

Soll ein Serverprofil 17 später einem anderen Server-Computer, wie beispielsweise einen zweiten Rack-Server 12, zugeordnet werden, wird zunächst der erste Rack-Server 12 heruntergefahren. Hierzu werden entsprechende Steuerbefehle von der Management-Software 19 über das Administrationsnetzwerk 14 an den Systemmanagementbaustein 13 übertragen, der daraufhin das Herunterfahren des ersten Rack-Servers 12 einleitet. Nach erfolgter Rückmeldung wird eine Verknüpfung des Serverprofils 17 von dem ersten Rack-Server 12 in der Managementstation 15 gelöscht. Optional können auch in ersten Rack-Server lokal gespeicherte Konfigurationsdaten, insbesondere eine virtuelle Adresse gelöscht oder für ungültig erklärt werden. Nachfolgend kann dasselbe Profil 17 dann dem zweiten Rack-Server 12 zugeordnet werden, der wiederum auf Anforderung der Management-Software 19 aktiviert und unter Verwendung derselben Konfigurationsparameter wie zuvor der erste Rack-Server 12 gebootet werden kann. Daraufhin kann der zweite Rack-Server 12 die Funktion übernehmen, die zuvor von dem ersten Rack-Server 12 ausgeführt wurde, ohne dass für die darauf ablaufende Software oder externe Client-Computer eine Änderung der Netzwerkumgebung erkennbar ist.

Eine ähnliche Übertragung ist auch beim Ausfall eines einzelnen Rack-Servers möglich. Fällt der erste Rack-Server 12 dauerhaft aus, beispielsweise, weil darin angeordnete Komponenten beschädigt wurden, wird ein darauf ablaufendes Serverprofil zunächst freigegeben, nachdem der erste Rack-Server 12 heruntergefahren oder als defekt abgemeldet wurde. Daraufhin kann der defekte Rack-Server 12 ausgebaut und durch einen baugleichen oder bauähnlichen Rack-Server 12 ersetzt werden. In diesem Fall muss die Managementstation 15 zunächst den neu eingebauten Rack-Server 12 erkennen. Hierzu kann, wie oben beschrieben, beispielsweise das DHCP-Protokoll verwendet werden, um eine physikalische Adresse eines Systemmanagementbausteins des neuen Rack-Servers 12 zu erfassen. Nachfolgend kann dann beispielsweise eine manuelle IP-Umleitung von der IP-Adresse des Systemmanagementbausteins 13 des defekten Racks-Servers 12 auf die IP-Adresse eines Systemmanagementbausteins 13 des neunen Rack-Servers 12 eingerichtet werden, sodass der neue Rack-Server 12 für die Management-Software 19 unter derselben Adresse ansprechbar ist wie der erste Rack-Server 12c. Nachfolgend kann das Serverprofil 17 wie oben beschrieben dem neuen Rack-Server zugeordnet werden.

Die oben beschriebenen Anordnungen und Verfahren stellen sicher, dass Serverprofile 17 auf einfache Weise verschiedenen Server-Computern eines Computersystems 10 oder 20 zugeordnet werden können. Dabei ist es unerheblich, ob die Zuordnung direkt, wie im Falle der Rack-Server 12 beschrieben, oder indirekt, beispielsweise durch die Vermittlung eines Management-Blades 26 wie unter Bezugnahme auf die Server-Blades 24 beschrieben, erfolgt. In jedem Fall wird sichergestellt, dass nie zwei Server-Computer mit derselben virtuellen Adresse oder demselben Virtualisierungsparameter gebootet werden und somit miteinander in Konflikt treten.

Selbstverständlich können die oben bezüglich der Computersysteme 10 und 20 beschriebenen Merkmale sowie die bezüglich des Verfahrens beschriebenen Verfahrensschritte in beinahe beliebiger Weise miteinander kombiniert werden, um weitere vorteilhafte Ausgestaltungen der hier beschriebenen Systeme und Verfahren zu erhalten.

### Bezugszeichenliste

- 10: Computersystem
- 11: Rack-Gehäuse
- 12: Rack-Server
- 13: Systemmanagementbaustein
- 14: Administrationsnetzwerk
- 15: Managementstation
- 16: Datenbank
- 17: Serverprofil
- 18: weiteres Datennetzwerk
- 19: Managementsoftware

- 20: Computersystem
- 21: Adresstabelle
- 22: BIOS-Baustein
- 23: Einsteckkarte
- 24: Server-Blade
- 25: Blade-Chassis
- 26: Management-Blade
- 27: Adresstabelle
- 28: BIOS-Baustein
- 29: I/O-Adapter
- 30: Speicherschnittstelle

- S31 bis S36: Verfahrensschritte

## Patentansprüche

1. Computersystem (10, 20), aufweisend:
- wenigstens einen Server-Computer, wobei der Server-Computer wenigstens einen Prozessor, einen Arbeitsspeicher sowie einen Systemmanagementbaustein (13) in der Form eines integrierten Mikrocontrollers mit eigenem Arbeitsspeicher und nichtflüchtigem Speicher sowie einer Netzwerkschnittstelle aufweist;
- eine Managementstation (15), wobei die Managementstation (15) dazu eingerichtet ist, eine Mehrzahl von Serverprofilen (17) zu verwalten und wenigstens ein Serverprofil (17) der Mehrzahl von Serverprofilen auszuwählen und dem wenigstens einen Server-Computer zuzuordnen, wobei jedes der Serverprofile (17) wenigstens eine virtualisierte Netzwerkkennung umfasst, die dazu dient, einen dem Serverprofil (17) zugeordneten Serverdienst eindeutig zu identifizieren; und
- wenigstens ein Datennetzwerk (14), über das der wenigstens eine Server-Computer und die Managementstation (15) datentechnisch gekoppelt sind;
wobei der Systemmanagementbaustein (13) des wenigstens einen Server-Computers dazu eingerichtet ist,
- bei Aktivierung des Systemmanagementbausteins (13) in einer Pre-Boot-Phase des Server-Computers wenigstens eine Anfrage zum Abrufen oder Bestätigen wenigstens einer virtualisierten Netzwerkkennung eines von der Managementstation zugeordneten Serverprofils (17) an die Managementstation (15) zu senden;
- falls auf die Anfrage hin eine Antwort der Managementstation (15) zur Übermittlung oder zur Bestätigung der wenigstens einen virtualisierten Netzwerkkennung empfangen wurde, in der Pre-Boot-Phase wenigstens eine Netzwerckomponente des Server-Computers unter Verwendung der wenigstens einen von der Managementstation (15) übermittelten oder bestätigten, virtualisierten Netzwerkkennung zu konfigurieren und den Server-Computer nachfolgend unter Verwendung der konfigurierten Netzwerkkennung zu starten; und
- andernfalls einen Start des wenigstens einen Server-Computers mit einer zuvor von der Managementstation (15) übermittelten, virtualisierten Netzwerkkennung zu verhindern.

2. Computersystem (10, 20) nach Anspruch 1,
**dadurch gekennzeichnet, dass**
in dem wenigstens einen Serverprofil (17) wenigstens eine der folgenden Angaben gespeichert sind: eine MAC-Adresse, ein Fibre-Channel-Port-Name, ein Fibre-Channel-Knotenname, ein Boot-Modus, eine Adresse eines Boot-Mediums, eine virtuelle LAN-Kennung, eine LAN-Konfiguration, eine Fibre-Channel-over-Ethernet (FCoE) Konfiguration oder eine iSCSI-Kennung.

3. Computersystem (10, 20) nach Anspruch 1 oder 2,
**dadurch gekennzeichnet, dass**
der wenigstens eine Server-Computer einen ersten Speicher zum Speichern einer unveränderlichen physikalischen Netzwerkkennung und einen zweiten Speicher zum Speichern der von der Managementstation (15) übermittelten, virtualisierten Netzwerkkennung aufweist.

4. Computersystem (10, 20) nach Anspruch 3,
**dadurch gekennzeichnet, dass**
der wenigstens eine Server-Computer einen dritten Speicher zum nichtflüchtigen Speichern einer Systemeinstellung aufweist, die angibt, ob der Server-Computer in einer Virtualisierungsbetriebsart betrieben werden soll, wobei der Systemmanagementbaustein (13) dazu eingerichtet ist, in der Virtualisierungsbetriebsart den wenigstens einen Server-Computer bei der Managementstation (15) anzumelden.

5. Computersystem (10, 20) nach Anspruch 3 oder 4,
**dadurch gekennzeichnet, dass**
der Systemmanagementbaustein (13) des wenigstens einen Server-Computers dazu eingerichtet ist, den wenigstens einen Server-Computer mit der physikalischen Netzwerkkennung zu starten, falls keine Managementverbindung mit der Managementstation (15) hergestellt werden kann.

6. Computersystem (10, 20) nach einem der Ansprüche 1 bis 5,
**dadurch gekennzeichnet, dass**
der wenigstens eine Server-Computer und die Managementstation (15) räumlich und/oder funktional unabhängige Computer sind und jeweils wenigstens eine Stromversorgungseinheit aufweisen.

7. Computersystem (10, 20) nach Anspruch 6,
**gekennzeichnet durch** wenigstens ein Server-Blade (24),
das datentechnisch mit der Managementstation (15) gekoppelt ist, wobei die Managementstation (15) dazu eingerichtet ist, das wenigstens eine ausgewählte Serverprofil (17) wahlweise dem Server-Blade (24) oder dem wenigstens einen Server-Computer zuzuordnen.

8. Verfahren zum Starten eines Server-Computers mit den Schritten:
- Aktivieren eines Systemmanagementbausteins (13) des Server-Computers, wobei der Systemmanagementbaustein (13) einen integrierten Mikrocontroller mit eigenem Arbeitsspeicher und nichtflüchtigem Speicher sowie einer Netzwerkschnittstelle aufweist;
- Versuchen bei Aktivierung des Systemmanagementbausteins in einer Pre-Boot-Phase des Server-Computers eine an einen von dem Server-Computer unabhängige Managementstation (15) adressierte Anfrage zum Abrufen oder Bestätigen wenigstens einer virtualisierten Netzwerkkennung eines von der Managementstation (15) zugeordneten Serverprofils (17) von dem Systemmanagementbaustein (13) zu senden, wobei die wenigstens eine virtualisierte Netzwerkkennung dazu dient, einen dem Serverprofil (17) zugeordneten Serverdienst eindeutig zu identifizieren;
- Ermitteln, in der Pre-Boot-Phase des Server-Computers, ob eine Antwort zur Übermittlung oder zur Bestätigung der wenigstens einen virtualisierten Netzwerkkennung der Managementstation (15) auf die Anfrage empfangen wurde;
wobei der Systemmanagementbaustein die folgenden Schritte durchführt:
- falls eine Antwort empfangen wurde, in der Pre-Boot-Phase, Konfigurieren wenigstens einer Netzwerkkomponente des Server-Computers unter Verwendung einer von der Managementstation (15) übermittelten oder bestätigten, virtualisierten Netzwerkkennung und Starten des Server-Computers; und
- falls keine Antwort empfangen wurde, Verhindern eines Starts des Server-Computers mit einer zuvor von der Managementstation (15) übermittelten, virtualisierten Netzwerkkennung.

9. Verfahren nach Anspruch 8, wobei die Schritte des versuchten Sendens und Ermittelns in der Pre-Boot-Phase des Server-Computers wiederholt durchgeführt werden, bis eine Antwort der Managementstation (15) empfangen wurde.

10. Verfahren nach Anspruch 8, mit dem zusätzlichen Schritt:
- Konfigurieren der wenigstens einen Netzwerkkomponente des Server-Computers unter Verwendung einer in dem Server-Computer gespeicherten, physikalischen Netzwerkkennung und Starten des Server-Computers mit der physikalischen Netzwerkkennung, falls innerhalb eines vorbestimmten Zeitraums keine Antwort der Managementstation (15) empfangen wurde.

11. Verfahren nach einem der Ansprüche 8 bis 10, mit dem zusätzlichen Schritt:
- Markieren einer zuvor von der Managementstation (15) empfangenen, virtualisierten Netzwerkkennung als ungültig, wenn innerhalb eines vorbestimmten Zeitraums keine Antwort der Managementstation (15) empfangen werden kann.

12. Server-Computer, aufweisend:
- wenigstens einen Prozessor sowie einen mit dem Prozessor gekoppelten Arbeitsspeicher zum Verarbeiten von Daten;
- wenigstens eine Netzwerkkomponente zum Bereitstellen einer Datenverbindung für den Server-Computer; und
- einen Systemmanagementbaustein (13) zum Verwalten des Server-Computers über eine Managementverbindung, wobei der Systemmanagementbaustein (13) einen integrierten Mikrocontroller mit eigenem Arbeitsspeicher und nichtflüchtigem Speicher sowie einer Netzwerkschnittstelle aufweist;
wobei der Systemmanagementbaustein (13) dazu eingerichtet
ist,
- bei Aktivierung des Systemmanagementbausteins in einer Pre-Boot-Phase des Server-Computers wenigstens eine Anfrage zum Abrufen oder Bestätigen wenigstens einer virtualisierten Netzwerkkennung eines von einer Managementstation (15) zugeordneten Serverprofils (17) an die Managementstation (15) zu senden, wobei die wenigstens eine virtualisierte Netzwerckennung dazu dient, einen dem Serverprofil (17) zugeordneten Serverdienst eindeutig zu identifizieren;
- falls eine Antwort zur Übermittlung oder zur Bestätigung der wenigstens einen virtualisierten Netzwerkkennung der Managementstation (15) auf die Anfrage empfangen werden kann, in der Pre-Boot-Phase die wenigstens eine Netzwerkkomponente des Server-Computers unter Verwendung einer von der Managementstation (15) empfangenen oder bestätigten, virtualisierten Netzwerkkennung zu konfigurieren und den Server-Computer zu starten; und
- andernfalls, einen Start des Server-Computers mit einer zuvor von der Managementstation (15) empfangenen, virtualisierten Netzwerkkennung zu verhindern.

13. Server-Computer nach Anspruch 12,
**dadurch gekennzeichnet, dass**
der Server-Computer wenigstens eine Stromversorgungseinheit zum Betrieb des Server-Computers unabhängig von der Stromversorgung der Managementstation (15) umfasst.

14. Server-Computer nach Anspruch 12 oder 13,
**gekennzeichnet durch** wenigstens eine zweite Netzwerkkomponente zur Herstellung der Managementverbindung, wobei die erste und die zweite Netzwerkkomponente unabhängig voneinander sind und die zweite Netzwerkkomponente eine zweite, physikalische Netzwerkkennung aufweist.

15. Verwendung eines Systemmanagementbausteins (13) zum Virtualisieren eines Server-Computers, wobei der Systemmanagementbaustein (13) einen integrierten Mikrocontroller mit eigenem Arbeitsspeicher und nichtflüchtigem Speicher sowie einer Netzwerkschnittstelle aufweist und dazu eingerichtet ist, bei Aktivierung des Systemmanagementbausteins (13) in einer Pre-Boot-Phase des Server-Computers wenigstens eine Anfrage zum Abrufen oder Bestätigen wenigstens einer virtualisierten Netzwerkkennung eines von einer Managementstation (15) zugeordneten Serverprofils (17) über eine Managementverbindung zu senden, wobei die wenigstens eine virtualisierte Netzwerkkennung dazu dient, einen dem Serverprofil (17) zugeordneten Serverdienst eindeutig zu identifizieren, und, falls eine Antwort zur Übermittlung oder zur Bestätigung der wenigstens einen virtualisierten Netzwerkkennung der Managementstation (15) auf die Anfrage empfangen werden kann, in der Pre-Boot-Phase, wenigstens eine Netzwerkkomponente des Server-Computers unter Verwendung einer empfangenen oder bestätigten, virtualisierten Netzwerkkennung zu konfigurieren und den Server-Computer zu starten und andernfalls einen Start des Server-Computers mit einer zuvor von der Managementstation (15) empfangenen, virtualisierten Netzwerkkennung zu verhindern.

## Claims

1. Computer system (10, 20), comprising:
- at least one server computer, wherein the server computer comprises at least one processor, a main memory as well as a system management module (13) in the type of an integrated microcontroller with its own main memory and non-volatile memory as well as a network interface;
- a management station (15), wherein the management station (15) is configured to manage a plurality of server profiles (17) and to select at least one server profile (17) from the plurality of server profiles and assign it to the at least one server computer, wherein each of the server profiles (17) has at least one virtualized network identifier that serves to unambiguously identify a server service assigned to the server profile (17); and
- at least one data network (14), via which the at least one server computer and the management station (15) are coupled in a data-technical manner;
wherein the system management module (13) of the at least one server computer is configured to
- send at least one request for retrieving or confirming at least one virtualized network identifier of a server profile (17) assigned by the management station, to the management station (15), on activation of the system management module (13) in a pre-boot-phase of the server computer;
- if a reply of the management station (15) for transmission or confirmation of the at least one virtualized network identifier has been received in response to the request, configure at least one network component of the server computer, in the pre-boot phase, using the at least one virtualized network identifier transmitted or confirmed by the management station (15), and to subsequently start the server computer using the configured network identifier; and
- otherwise, to prevent a start of the at least one server computer with a virtualized network identifier previously transmitted by the management station (15).

2. Computer system (10, 20) according to claim 1,
**characterized in that**
at least one of the following information is stored in the at least one server profile (17): a MAC address, a fiber-channel port name, a fiber channel node name, a boot mode, an address of a boot medium, a virtual LAN identifier, a LAN configuration, a fiber-channel-over-Ethernet (FCoE) configuration or an iSCSI-identifier.

3. Computer system (10, 20) according to claim 1 or 2,
**characterized in that**
the at least one server computer comprises a first memory for storing a static physical network identifier, and a second memory for storing the virtualized network identifier transmitted by the management station (15).

4. Computer system (10, 20) according to claim 3,
**characterized in that**
the at least one server computer comprises a third memory for storing a system configuration in a non-volatile manner, which indicates whether the server computer is to be operated in a virtualization operating mode, wherein the system management module (13) is configured to authenticate the at least one server computer in the management station (15) in the virtualization operating mode.

5. Computer system (10, 20) according to claim 3 or 4,
**characterized in that**
the system management module (13) of the at least one server computer is configured to start the at least one server computer with the physical network identifier, in the case that no management connection to the management station (15) can be established.

6. Computer system (10, 20) according to any one of claims 1 to 5,
**characterized in that**
the at least one server computer and the management station (15) are physically and/or functionally independent computers, and each comprise at least one power supply unit.

7. Computer system (10, 20) according to claim 6,
**characterized by** at least one server blade (24), which is coupled with the management station (15) in a data-technical manner, wherein the management station (15) is configured to assign the at least one selected server profile (17) selectively to the server blade (24) or to the at least one server computer.

8. Method for starting a server computer, comprising the following steps:
- activating a system management module (13) of the server computer, wherein the system management module (13) comprises an integrated microcontroller with its own main memory and a non-volatile memory as well as a network interface;
- trying, on activation of the system management module, in a pre-boot phase of the server computer, to send a request, addressed to a management station (15) which is independent of the server computer, for retrieving or confirming at least one virtualized network identifier of a server profile (17) assigned by the management station (15) from the system management module (15), wherein the at least one virtualized network identifier serves to unambiguously identify a server service assigned to the server profile (17);
- determining, in the pre-boot phase of the server computer, whether a reply for transmission or for confirmation of the at least one virtualized network identifier of the management station (15) has been received in response to the request;
wherein the system management module carries out the following steps:
- if a reply has been received, in the pre-boot phase, configuring at least one network component of the server computer using a virtualized network identifier transmitted or confirmed by the management station (15), and starting of the server computer; and
- if no reply has been received, preventing a start of the server computer with a virtualized network identifier previously transmitted by the management station (15).

9. Method according to claim 8, wherein the steps of the attempted sending and determining are repeatedly carried out in the pre-boot phase of the server computer until a reply of the management station (15) has been received.

10. Method according to claim 8, comprising the additional step of:
- configuring the at least one network component of the server computer using a physical network identifier stored in the server computer, and starting the server computer with the physical network identifier, if no reply of the management station (15) has been received within a predetermined time period.

11. Method according to any one of claims 8 to 10, comprising the additional step of:
- marking a virtualized network identifier previously received from the management station (15) to be invalid if no reply of the management station (15) can be received within a predetermined time period.

12. Server computer, comprising:
- at least one processor as well as a main memory, coupled with the processor, for the processing of data;
- at least one network component for providing a data connection for the server computer; and
- a system management module (13) for managing the server computer via a management connection, wherein the system management module (13) comprises an integrated microcontroller with its own main memory and non-volatile memory as well as a network interface;
wherein the system management module (13) is configured to
- send at least one request for retrieving or confirming at least one virtualized network identifier of a server profile (17) assigned by a management station (15), to the management station (15), on activation of the system management module (13) in a pre-boot-phase of the server computer, wherein the at least one virtualized network identifier serves to unambiguously identify a server service assigned to the server profile (17);
- if a reply of the management station (15) for transmission or confirmation of the at least one virtualized network identifier can be received in response to the request, to configure the at least one network component of the server computer, in the pre-boot phase, using at least one virtualized network identifier received or confirmed by the management station (15), and to start the server computer; and
- otherwise, to prevent a start of the server computer with a virtualized network identifier previously received from the management station (15).

13. Server computer according to claim 12,
**characterized in that**
the server computer comprises at least one power supply unit for operating the server computer independently of the power supply of the management station (15).

14. Server computer according to claim 12 or 13,
**characterized by** at least one second network component for establishing the management connection, wherein the first and the second network component are independent of one another, and the second network component comprises a second physical network identifier.

15. Use of a system management module (13) for virtualizing a server computer, wherein the system management module (13) comprises an integrated microcontroller with a distinct main memory and a non-volatile memory as well as a network interface, and is configured to send at least one request for retrieving or confirming at least one virtualized network identifier of a server profile (17) assigned by a management station (15), via management connection on activation of the system management module (13) in a pre-boot-phase of the server computer, wherein the at least one virtualized network identifier serves to unambiguously identify a server service assigned to the server profile (17), and, if a reply of the management station (15) for transmission or confirmation of the at least one virtualized network identifier can be received in response to the request, configure at least one network component of the server computer, in the pre-boot phase, using a received or confirmed, virtualized network identifier and to start the server computer, and, otherwise, to prevent a start of the server computer with a virtualized network identifier previously received from the management station (15) .

## Revendications

1. Système informatique (10, 20), présentant :
- au moins un ordinateur serveur, dans lequel l'ordinateur serveur présente au moins un processeur, une mémoire vive ainsi qu'un module de gestion du système (13) sous forme d'un microcontrôleur intégré avec une propre mémoire vive et une mémoire non volatile telle qu'une interface réseau ;
- une station de gestion (15), dans lequel la station de gestion (15) est configurée pour gérer une multitude de profils de serveur (17) et pour choisir au moins un profil de serveur (17) de la multitude de profils de serveur (17) et de l'attribuer à l'au moins un ordinateur serveur, dans lequel chaque profil de serveur (17) comprend au moins un identifiant de réseau virtualisé, qui sert à identifier uniquement un service de serveur attribué au profil de serveur (17) ; et
- au moins un réseau de données (14), par lequel l'au moins ordinateur serveur et la station de gestion (15) sont couplés de manière informatiquement ;
dans lequel le module de gestion du système (13) de l'au moins un ordinateur serveur est configuré pour
- lors de l'activation du module de gestion du système (13) dans une phase de prédémarrage de l'ordinateur serveur, envoyer à la station de gestion (15) au moins une demande pour appeler ou confirmer au moins un identifiant de réseau virtualisé d'un profil de serveur (17) attribué par la station de gestion;
- dans la phase de prédémarrage, configurer au moins un composant de système en utilisant l'au moins un identifiant de réseau virtualisé transmise ou confirmée par la station de gestion (15), et en suite démarrer l'ordinateur serveur en utilisant un identifiant de réseau virtualisée, et
- autrement empêcher un démarrage de l'au moins un ordinateur serveur avec un identifiant de réseau virtualisé, transmise préalablement par la station de gestion (15).

2. Système informatique (10, 20) selon la revendication 1,
**caractérisé en ce que**
dans l'au moins un profil de serveur (17) est enregistré au moins l'une des indication suivantes : une adresse-MAC, un nom de port Fibre-Channel, un nom de noeud du Fibre-Channel, un mode de démarrage, une adresse d'un support de prédémarrage, un identifiant de LAN virtuel, une configuration de LAN, une configuration de Fibre-Channel-over-Ethernet (FCoE) ou un identifiant de iSCSI.

3. Un système informatique (10, 20) selon la revendication 1 ou 2, **caractérisé en ce que** l'au moins un ordinateur serveur présente une première mémoire pour stocker un identifiant physique de réseau statique et une deuxième mémoire pour stocker l'identifiant de réseau virtualisé transmise par la station de gestion (15).

4. Système informatique (10, 20) selon la revendication 3, **caractérisé en ce que** l'au moins ordinateur serveur présente une troisième mémoire pour le stockage non-volatile d'une configuration de système, qui indique, si l'ordinateur de serveur doit être opéré dans un mode de fonctionnement virtualisé, dans lequel le module de gestion du système (13) est configuré pour authentifier au moins un ordinateur serveur auprès de la station de gestion (15).

5. Système informatique (10, 20) selon la revendication 3 ou 4,
**caractérisé en ce que** le module de gestion du système (13) de l'au moins ordinateur serveur est configuré pour démarrer l'au moins ordinateur serveur avec l'identifiant de réseau physique, si aucune liaison de gestion peut être établie avec la station de gestion (15).

6. Système informatique (10, 20) selon l'une quelconque des revendications 1 à 5,
**caractérisé en ce que** l'au moins ordinateur serveur et la station de gestion (15) sont des ordinateurs indépendants spatialement et/ou fonctionnellement et présentent chacun au moins une unité d'alimentation en courant.

7. Système informatique (10, 20) selon la revendication 6, **caractérisé par** au moins un serveur-lame (24), qui est couplé de manière informatiquement avec la station de gestion (15), dans lequel la station de gestion (15) est configuré pour attribuer l'au moins un profil de serveur (17) sélectionné sélectivement au serveur-lame (24) ou à l'au moins un ordinateur serveur.

8. Procédé pour le démarrage d'un ordinateur serveur, comprenant les étapes de :
- l'activation d'un module de gestion du système (13) de l'ordinateur serveur, dans lequel le module de gestion du système (13) présente un microcontrôleur intégré avec une propre mémoire vive et une mémoire non-volatile ainsi qu'une interface de réseau ;
- essayer, lors de l'activation du module de gestion du système dans une phase de prédémarrage de l'ordinateur serveur, d'envoyer une demande adressée à la station de gestion (15) indépendant de l'ordinateur serveur pour appeler ou confirmer au moins un identifiant de réseau virtualisé du profil de serveur (17) attribué à la station de gestion (15), à partir du module de gestion du système (13), dans lequel l'au moins un identifiant de réseau virtualisé sert à identifier uniquement un service de serveur attribué au profil de serveur (17);
- déterminer, dans la phase de prédémarrage de l'ordinateur serveur, si une réponse pour la transmission ou pour une confirmation de l'au moins un identifiant de réseau virtualisé de la station de gestion (15) a été reçue à la demande, dans lequel le module de gestion du système effectue les étapes suivantes :
- si une réponse á été reçue, dans la phase de prédémarrage, la configuration d'au moins un composant de réseau de l'ordinateur serveur en utilisant un identifiant de réseau virtualisé transmise ou confirmée par la station de gestion (15), et le démarrage de l'ordinateur serveur ; et
- si aucune réponse a été reçue, empêchement d'un démarrage de l'ordinateur serveur avec un identifiant de réseau virtualisé transmise préalablement par la station de gestion (15).

9. Procédé selon la revendication 8, dans lequel les étapes d'envoie et de détermination essayés sont effectuées à plusieurs reprises dans la phase de prédémarrage de l'ordinateur serveur jusqu'à ce qu'une réponse de la station de gestion (15) a été reçue.

10. Procédé selon la revendication 8, avec l'étape supplémentaire :
- Configuration de l'au moins un composant de réseau de l'ordinateur serveur en utilisant un identifiant physique du réseau, stocké dans l'ordinateur serveur et le démarrage de l'ordinateur serveur avec l'identifiant physique du réseau, si aucune réponse a été reçue dans un intervalle de temps prédéterminé de la station de gestion (15).

11. Procédé selon l'une des revendication 8 à 10, avec l'étape supplémentaire :
- Marquer d'un identifiant de réseau virtualisé comme invalide, reçu préalablement par la station de gestion (15) si aucune réponse de la station de gestion (15) peut être reçue dans un intervalle de temps prédéterminé.

12. Ordinateur serveur, présentant :
- au moins un processeur ainsi qu'une mémoire vive couplée avec le processeur pour traiter des données ;
- au moins un composant de réseau pour la fourniture d'une connexion de données pour l'ordinateur serveur ; et
- un module de gestion du système (13) pour la gestion de l'ordinateur serveur au moyen d'une liaison de gestion, dans lequel le module de gestion du système (13) présente un microcontrôleur intégré avec une propre mémoire vive et une mémoire non-volatile ainsi qu'une interface de réseau, dans lequel le module de gestion du système (13) est configuré pour :
- lors de l'activation du module de gestion du système dans une phase de prédémarrage de l'ordinateur serveur, d'envoyer à la station de gestion (15), au moins une demande pour appeler ou confirmer au moins un identifiant de réseau virtualisé d'un profil de serveur (17) attribué dans lequel l'au moins un identifiant de réseau virtualisé sert à identifier uniquement un service de serveur attribué au profil de serveur (17) ;
- dans la phase de prédémarrage, si une réponse pour la transmission ou pour la confirmation de l'au moins un identifiant de réseau virtualisé de la station de gestion (15) peut être reçue à la demande de configurer l'au moins un composant de réseau de l'ordinateur serveur en utilisant un identifiant de réseau virtualisé reçu ou confirmé par la station de gestion et de démarrer l'ordinateur serveur ; et
- autrement d'empêcher un démarrage de l'ordinateur serveur avec un identifiant de réseau virtualisé reçu préalablement à partir de la station de gestion (15).

13. Ordinateur serveur selon la revendication 12, **caractérisé en ce que** l'ordinateur serveur comprend au moins une unité d'alimentation en courant pour le fonctionnement de l'ordinateur serveur indépendant de l'alimentation rn courant de la station de gestion (15).

14. Ordinateur serveur selon la revendication 12 ou 13, **caractérisé par** au moins un deuxième composant de réseau pour établir la liaison de gestion, dans lequel le premier et le deuxième composants de réseau sont indépendants l'un de l'autre et le deuxième composant de réseau présente un deuxième identifiant physique de réseau.

15. L'utilisation d'un module de gestion du système (13) pour virtualiser un ordinateur serveur, dans lequel le module de gestion du système (13) présente un microcontrôleur intégré avec une propre mémoire vive et une mémoire non-volatile ainsi qu'une interface de réseau, et est configuré, dans une phase de prédémarrage et via une liaison de gestion, pour envoyer à la station de gestion (15) au moins une demande pour appeler ou confirmer d'au moins un identifiant de réseau virtualisé d'un profil de serveur (17) attribué par une station de gestion (15), dans lequel l'au moins un identifiant de réseau virtualisé sert à identifier uniquement un service de serveur attribué au profil de serveur (17), et, si une réponse pour la transmission ou la confirmation de l'au moins un identifiant de réseau virtualisé de la station de gestion (15) peut être reçue à la demande, de configurer, dans la phase de prédémarrage, au moins un composant de réseau de l'ordinateur serveur en utilisant un identifiant de réseau virtualisé reçu ou confirmé, et de démarrer l'ordinateur serveur et autrement d'empêcher un démarrage de l'ordinateur serveur avec un identifiant de réseau virtualisé reçu préalablement à partir de la station de gestion (15).
